# EUROPEAN PATENT SPECIFICATION

(11) **EP 0 610 409 B1**
(45) Date of publication and mention of the grant of the patent: **15.05.1996**
(21) Application number: 92923700.6
(22) Date of filing: 27.10.1992
(51) Int. Cl.: G01F 1/58, G01P 5/08

(54) **MEASURING TUBE FOR AN ELECTROMAGNETIC FLOWMETER**
MESSROHR FÜR EINEN MAGNETISCH-INDUKTIVEN DURCHFLUSSMESSER
TUBE DE MESURE POUR DEBITMETRE ELECTROMAGNETIQUE

(30) Priority: 29.10.1991 DE 4135574
(43) Date of publication of application: 17.08.1994
(73) Proprietor: Danfoss A/S, DK-6430 Nordborg (DK)
(72) Inventor: HANSEN, Henry, DK-6300 Grasten (DK)
(74) Representative: Nissen, Georg
(86) International application number: DK9200311
(87) International publication number: WO9309403

(56) References cited:
- DE-A- 3 735 515
- US-A- 4 592 886

## Description

The invention relates to a measuring tube for an electromagnetic flowmeter, in which a metal tube is provided internally with an electrically insulating liner with a gap therebetween and said gap between the metal tube and the liner is filled with a filler material.

DE-PS 11 21 347 describes an electromagentic flowmeter consisting of a measuring tube made of stainless steel with a ceramic tubing part, the latter acting as a liner. The ceramic tubing part is mounted at one end of the measuring tube and which is then closed with another tube of stainless steel, so that the complete flowmeter appears with the same inner diameter throughout. The outer diameter of the ceramic tubing is somewhat smaller than the gap in which it is mounted so that the medium to be measured surrounds the ceramic tubing.

The above is not only a complicated method of assembly, but does also require specific characteristics of the material to be used in the flowmeter. The material that creates the necessary electric insulation to the electrodes in the flowmeter, in the present case the ceramic, has to consist of a solid material of a certain thickness. The material to be used in the measuring tube will be exposed to the medium to be measured and thus has to be resistant towards this. Finally, the flowmeter introduces a slight error of measurement because the medium flowing around the ceramic tubing is not accounted for in the measurement.

From US-PS 45 92 886 it is known that, when applying the liner by an injection-moulding process, an uninterruptedly consistent engagement between the liner and the metal tube is impossible to achieve on account of the different shrinkages of the metal tube and liner, and, at least in places, a gap remains. When the flowmeter is being operated, this gap gives rise to problems. Thus, the liner may become distorted under the pressure of the medium flowing through and in the course of time may be destroyed. In addition, fluid may diffuse right through the liner and fill the voids. Because the fluid expands as the temperature rises, however, on the other hand an inadmissible deformation of the liner can take place. The same problem also arises in the case of liners mounted by adhesion; when the adhesive, which has only a limited thermal stability, decomposes in places, such voids are formed.

In the known case, a gap is left deliberately between the liner and the metal tube. A thermo-setting plastics material is injected into the gap so that inadmissible deformation of the liner as a consequence of the fluid pressure in the measuring tube need no longer be cause for concern. It is, however, impossible to ensure that the filler material will bond firmly with the entire external surface of the liner. The consequence of this is that on the occurrence of a partial vacuum in the measuring line, the liner will lift away from the filler material in places, which again leads to an inadmissible deformation of the liner and to the formation of unwanted cavities. This situation can be partly prevented only by means of liners that are sufficiently thick and therefore stable.

The invention is based on the problem of disclosing a means by which a liner that is thin and yet resistant to pressure and partial vacuum can be provided.

This problem is solved according to the invention in that in an apparatus as defined in the opening paragraph the filler material is a medium capable, under the operating conditions of the flowmeter, of flowing, and that the volume of the gap is enlarged by at least one recess in the internal circumferential face of the metal tube, and the gap is sealed, whereby escape of any of said filler material from the space defined by said gap and said recess or recesses, is avoided.

Once the liner has been positioned against the metal tube, this medium having the ability to flow is introduced into the remaining gap. It forms a pressure cushion which supports the liner should excess pressure occur in the measuring tube. A partial vacuum in the measuring tube affects the entire area of the gap and leads to a corresponding partial vacuum in the medium having the ability to flow. In both operating conditions the liner is subjected to only slight stress and can therefore be of thin construction. Cavities into which measuring fluid could diffuse are not formed. It is very advantageous for the volume of the gap to be enlarged by at least one recess in the inner circumferential face of the metal tube. Enlarging the volume in this manner increases the amount of the medium having the ability to flow and thus ensures the uniformity of the pressure distribution and a greater opportunity for equalization. Furthermore, the pressure cushion will only expert radial pressure to the liner; axial pressure, however, will be through the recess flanges.

It is expedient for the liner to be fixed to the metal tube only at a few places. The medium having the ability to flow therefore surrounds the liner in the form of a coherent layer. A pressure equalization can, at any instant, therefore be effected within the medium having the ability to flow both for the length of the liner and over its circumference. This type of fixing also facilitates exchange of the liner.

It is especially favourable for the liner to be bent outwards at its ends and to be fixed there to end flanges of the metal tube. The fixing points then lie outside the flow-through channel, so that a prefabricated liner can be installed without problems. Any irregularities are compensated for by the medium having the ability to flow which is introduced subsequently.

The liner can furthermore be fixed to the measuring tube by means of two measuring electrodes, which pass, insulated, through the measuring tube at opposing locations.

The liner consists especially advantageously of fluorocarbon. This material is resistant to the majority of fluids to be metered and by virtue of the support according to the invention has a long service life as well.

The recess can thus essentially be constituted by an annular groove, the width of which extends approximately for the length of the metal tube. Virtually the whole of the liner is therefore supported exclusively on the medium having the ability to flow.

An alternative embodiment consists in providing a plurality of point-like recesses. In this case, the point-like recesses form collecting points for the medium having the ability to flow, which are joined together by the gap remaining between the liner and the surface of the metal tube.

Advantageously, the medium having the ability to flow has a boiling point above 250° C. This ensures that the ability to flow is maintained in the customary temperature range, which reaches to a maximum of 180° C, and that no vapour pressure that would impair the liner material occurs.

The medium having the ability to flow can be selected in particular from the group comprising silicone oil, silicone grease and glycerine. These materials have an adequate thermal and chemical stability. They also do not corrode the customary liner materials and the metal of the metal tube.

Glycerine in particular has a boiling point around 290° C. Moreover, it is advisable for the metal tube to consist of stainless steel. This material is non-magnetic and therefore does not disrupt the magnetic flux of the magnetic coil that is to be arranged externally around the measuring tube.

The invention is explained in detail hereinafter with reference to embodiments illustrated in the drawings, in which
- Fig. 1: is a longitudinal section through a measuring tube according to the invention and
- Fig. 2: is a partial sectional view through a modified embodiment.

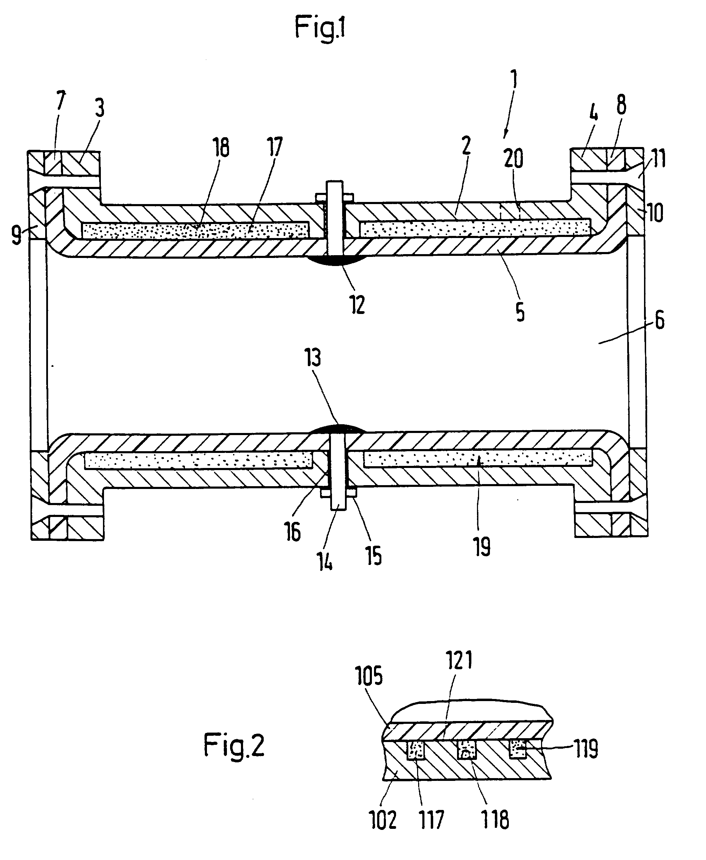

The measuring tube 1 in Fig. 1 comprises a metal tube 2 of stainless steel which is provided at its ends with flanges 3 and 4. On the inside of the metal tube 2 there is a liner 5, which bounds the flow-through channel 6. The liner 5 consists of fluorocarbon and has outwardly bent ends 7 and 8. These are fixed to the flanges 3 and 4 respectively by means of end plates 9 and 10 respectively, the end plates being held against the flanges by means of rivets 11. Two opposing electrodes 12 and 13 pass through the liner 5 and the metal tube 2 with their shanks 14, onto which a lock nut 15 is screwed. The heads of the electrodes hold the liner 5 firmly against the metal tube 2. In the region of the metal tube 2 the electrode shanks 14 are surrounded by an electrical insulating sleeve 16 provided with a flange.

Between the metal tube 2 and the liner 5 there remains a gap 17, which is intentionally enlarged by a recess 18 in the metal tube 2. This recess 18 is in the form of an annular groove, the width of which is approximately the same as the length of the metal tube 2 and which is interrupted only by two islands in the region of the electrodes 12 and 13.

This gap 17 is filled with a medium having the ability to flow 19, in this case glycerine. The medium having the ability to flow is introduced, after the liner 5 has been fixed, through a filling opening 20, illustrated diagrammatically, which is then sealed.

In the embodiment illustrated in Fig. 2, a gap 117 with point-like recesses 118 is provided between the metal tube 102 and the liner 105; the point-like recesses are interconnected by way of the gap 121 between the metal tube 102 and the liner 105, and are filled with a medium having the ability to flow 119.

In both cases, it is apparent that a very thin liner 5 can be used. Once it has been put into position, the entire remaining gap is filled with medium having the ability to flow. This medium serves both as a pressure cushion against excess pressure in the flow-through channel 6 and also as a continuous retaining means should a partial vacuum occur. Since the medium having the ability to flow is not affected by the operating conditions, the flowmeter has a long service life even under extreme conditions.

## Claims

1. A measuring tube for an electromagnetic flowmeter, in which a metal tube is provided internally with an electrically insulating liner with a gap therebetween and said gap between the metal tube and the liner is filled with a filler material, characterized in that the filler material is a medium (19; 119) capable, under the operating conditions of the flowmeter, of flowing and that the volume of the gap (17; 117) is enlarged by at least one recess (18; 118) in the internal circumferential face of the metal tube (2; 102), and the gap is sealed, whereby escape of any of said filler material from the space defined by said gap and said recess or recesses, is avoided.

2. A measuring tube according to claim 1, characterized in that the liner (5) is fixed to the metal tube (2) only at a few places.

3. A measuring tube according to claim 1 or 2, characterized in that the liner (5) is bent outwards at its ends (7, 8) and is fixed there to end flanges (3, 4) of the metal tube (2).

4. A measuring tube according to claim 2 or 3, characterized in that the liner (5) is fixed to the measuring tube (2) by means of two measuring electrodes (12, 13) which pass, insulated, through the measuring tube (2) at opposing points.

5. A measuring tube according to one of claims 1 to 4, characterized in that the liner (5; 105) consists of fluorocarbon.

6. A measuring tube according to claim 1, characterized in that the recess (18) is formed essentially by an annular groove, the width of which extends approximately for the length of the metal tube.

7. A measuring tube according to claim 1, characterized in that a plurality of point-like recesses (118) is provided.

8. A measuring tube according to one of claims 1 to 7, characterized in that the medium having the ability to flow (19; 119) has a boiling point above 250° C.

9. A measuring tube according to one of claims 1 to 8, characterized in that the medium having the ability to flow (19; 119) is selected from the group comprising silicone oil, silicone grease and glycerine.

10. A measuring tube according to one of claims 1 to 9, characterized in that the metal tube (2; 102) consists of stainless steel.

## Patentansprüche

1. Ein Meßrohr für einen elektromagnetischen Durchflußmesser, in dem ein Metallrohr innen mit einer elektrisch isolierenden Auskleidung versehen ist, so daß zwischen Metallrohr und Auskleidung ein Zwischenraum entsteht, welcher Zwischenraum mit einem Füllmaterial gefüllt ist, **dadurch gekennzeichnet,** daß das Füllmaterial ein unter Betriebsbedingungen des Durchflußmessers fließbares Medium (19; 119) ist, daß das Volumen des Zwischenraumes (17; 117) durch mindestens eine Vertiefung (18; 118) in der inneren Umfangsoberfläche des Metallrohres (2; 102) vergrößert ist, und daß der Zwischenraum abgedichtet ist, so daß ein Austreten des erwähnten Füllmaterials aus dem von dem erwähnten Zwischenraum und der erwähnten Vertiefung/den erwähnten Vertiefungen definierten Raum vermieden wird.

2. Ein Meßrohr nach Anspruch 1, **dadurch gekennzeichnet,** daß die Auskleidung (5) nur an wenigen Stellen am Metallrohr (2) befestigt ist.

3. Ein Meßrohr nach Anspruch 1 oder 2, **dadurch gekennzeichnet,** daß die Auskleidung (5) an ihren Enden (7, 8) nach außen gebogen, und dort an Endflanschen (3, 4) des Metallrohres (2) befestigt ist.

4. Ein Meßrohr nach Anspruch 2 oder 3, **dadurch gekennzeichnet,** daß die Auskleidung (5) mittels zwei Meßelektroden (12, 13) am Meßrohr befestigt ist, die das Meßrohr an einander gegenüberliegenden Punkten isoliert durchtreten.

5. Ein Meßrohr nach einem der Ansprüche 1 bis 4, **dadurch gekennzeichnet,** daß die Auskleidung (5; 105) aus Fluorcarbon besteht.

6. Ein Meßrohr nach Anspruch 1, **dadurch gekennzeichnet,** daß die Vertiefung (18) hauptsächlich aus einer ringförmigen Nut besteht, deren Breite sich etwa über die Länge des Metallrohres erstreckt.

7. Ein Meßrohr nach Anspruch 1, **dadurch gekennzeichnet,** daß eine Vielzahl von punktförmigen Vertiefungen (118) vorgesehen ist.

8. Ein Meßrohr nach einem der Ansprüche 1 bis 7, **dadurch gekennzeichnet,** daß das fließbare Medium (19; 119) einen Siedepunkt über 250°C hat.

9. Ein Meßrohr nach einem der Ansprüche 1 bis 8, **dadurch gekennzeichnet,** daß das fließbare Medium (19; 119) aus der Silikonöl, Silikonfett und Glyzerin umfassenden Gruppe gewählt ist.

10. Ein Meßrohr nach einem der Ansprüche 1 bis 9, **dadurch gekennzeichnet,** daß das Metallrohr (2; 102) aus rostfreiem Stahl besteht.

## Revendications

1. Tube de mesure pour un débitmètre électromagnétique, comportant un tube métallique situé à l'intérieur d'une garniture électriquement isolante, un espacement rempli d'une matière de remplissage étant disposé entre la garniture et le tube, caractérisé en ce que la matière de remplissage est un médium (19, 119) susceptible de couler lors des conditions de fonctionnement du débitmètre, en ce que le volume de l'espacement (17, 117) est agrandi par au moins un évidement (18, 118) dans la face intérieure circonférentielle du tube métallique (2, 102) et en ce que l'espacement est scellé pour éviter la fuite de ladite matière de remplissage de l'espace défini par ledit espacement et ledit évidement.

2. Tube de mesure selon la revendication 1, caractérisé en ce que le garnissage (5) est fixé au tube métallique (2) uniquement sur peu d'endroits.

3. Tube de mesure selon la revendication 1 ou 2, caractérisé en ce que le garnissage (5) est plié sur ses extrémités (7, 8) vers l'extérieur et fixé à cet endroit aux brides terminales (3, 4) du tube métallique (2).

4. Tube de mesure selon la revendication 2 ou 3, caractérisé en ce que le garnissage (5) est fixé au tube de mesure (2) au moyen de deux électrodes de mesure (12, 13) isolées traversant le tube de mesure (2) à des endroits opposés.

5. Tube de mesure selon une des revendications 1 à 4, caractérisé en ce que le garnissage (5, 105) est constitué de fluorocarbone.

6. Tube de mesure selon la revendication 1, caractérisé en ce que l'évidement (18) est formé essentiellement par une rainure annulaire dont la largeur s'étend à peu près sur la longueur du tube métallique.

7. Tube de mesure selon la revendication 1, caractérisé en ce qu'il est pourvu de plusieurs évidements (118) ressemblant à des points.

8. Tube de mesure selon une des revendications 1 à 7, caractérisé en ce que le médium susceptible de couler (19, 119) a un point d'ébullition supérieur à 250°C.

9. Tube de mesure selon une des revendications 1 à 8, caractérisé en ce que le médium susceptible de couler (19, 119) est choisi parmi le groupe comportant l'huile de silicone, la graisse de silicone et la glycémie.

10. Tube de mesure selon une des revendications 1 à 9, caractérisé en ce que le tube métallique (2, 102) est constitué d'acier inoxydable.
